# EUROPÄISCHE PATENTANMELDUNG

(11) **EP 0 959 047 A2**
(43) Veröffentlichungstag der Anmeldung: **24.11.1999**
(21) Anmeldenummer: 99105703.5
(22) Anmeldetag: 20.03.1999
(51) Int. Cl.: C02F 3/20, C02F 1/44

(54) **Verfahren und Vorrichtung zur Verbesserung des Sauerstoffeintrags bei aero-biologischen Aufbereitungsverfahren**

(30) Priorität: 25.03.1998 DE 19813255
(71) Anmelder: Uwatech Umwelt- und Wassertechnik GmbH, 29336 Nienhagen (DE)
(72) Erfinder: Kohlheb, Robert Dr., 29336 Nienhagen (DE)
(74) Vertreter: König, Norbert

(57) **Zusammenfassung**

Ein Verfahren zur Verbesserung der Sauerstoffeinbringung bei einem aero-biologischen Aufbereitungsverfahren, bei dem ein aero-biologisch aufzubereitendes Medium, insbesondere Abwasser zur Sauerstoffanreicherung in einem Becken belüftet wird, weist folgende Verfahrensschritte aus:
- Filterung und/oder Vorbelüftung des Mediums vor dem Eintritt in das Becken und/oder
- Filterung des aus dem Becken überlaufenden geklärten Abwassers und/oder
- Nachbelüftung des Filtrats bzw. Permeats und/oder
- Rückführung des belüfteten Filtrats bzw. Permeats und des Konzentrats bzw. Retentats aus der Filterung in das Becken.

## Beschreibung

Die Erfindung betrifft ein Verfahren und eine Vorrichtung zur Verbesserung des Sauerstoffeintrags bei aero-biologischen Aufbereitungsverfahren.

Es werden bereits aero-biologische Aufbereitungsverfahren und Vorrichtungen zur Behandlung von Abwässern und Gewässern eingesetzt, die aber sämtlich den Nachteil haben, daß sie hohe Energiekosten erfordern um genügend Sauerstoff in die aufzubereitenden Medien eintragen zu können.

Die Aufgabe der vorliegenden Erfindung besteht deshalb darin, ein Verfahren und eine Vorrichtung zur Verbesserung des Sauerstoffeintrags bei aero-biologischen Aufbereitungsverfahren anzugeben, durch die die Energiekosten gesenkt werden können.

Die erfindungsgemäße Lösung sieht vor, den bisher schon verwendeten Verfahren und Vorrichtungen eine spezielle Vorbelüftung und/oder eine spezielle Nachbelüftung zuzuschalten. Hierdurch können die Energiekosten um bis zu 50 % verringert werden. Mit dieser erfindungsgemäßen Vorbelüftung und/oder Nachbelüftung können vorhandene Verfahren und Vorrichtungen nachgerüstet werden.

Die Erfindung soll nachfolgend anhand der beigefügten Zeichnung, in der ein Ausführungsbeispiel dargestellt ist, näher erläutert werden.

Es zeigt
- Fig. 1: ein Fließbild eines erfindungsgemäßen dreistufigen aero-biologischen Aufbereitungsverfahrens und

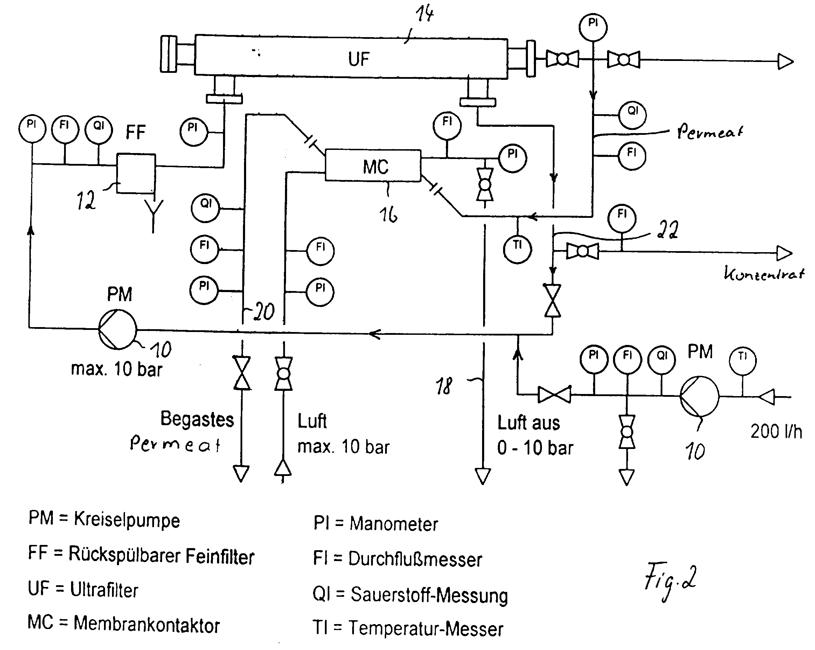

- Fig. 2: ein Fließbild des Verfahrens der dritten Stufe beim Verfahren nach Fig. 1.

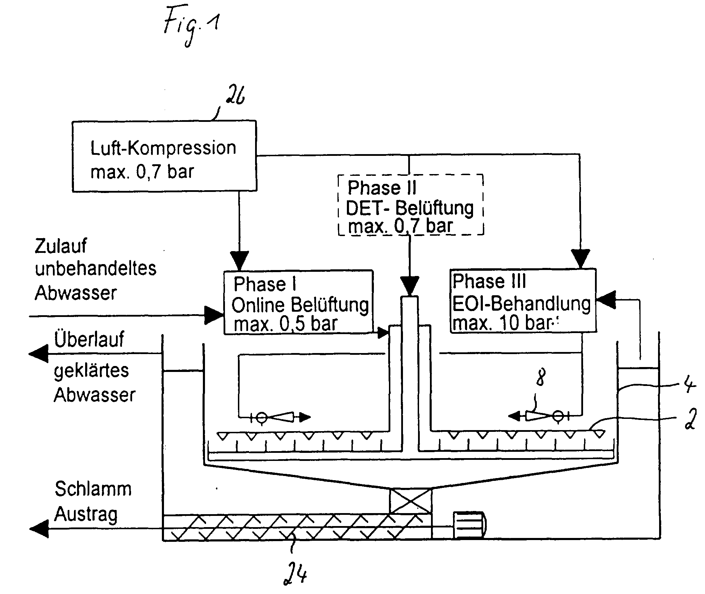

Die Zeichnung (Fig. 1) stellt ein Verfahren zur aero-biologischen Aufbereitung von Abwasser, Gewässer e.t.c. dar, bei dem die Phase II das Basisverfahren darstellt, dem die Phase I als Vorverfahren vorgeschaltet und dem die Phase III als Nachverfahren nachgeschaltet ist.

Die Phase II wird durch ein an sich bekanntes aero-biologisches Verfahren realisiert, das daher nicht näher dargestellt werden soll, vorzugsweise jedoch durch das bereits vorgeschlagene Verfahren nach der DE 197 47 662, bei dem ein oder mehrere Begasungsregister auf dem Boden eines Klärbeckens angeordnet sind. Das Begasungsregister besteht aus feinporigen Schlauch- oder Röhrchenmembranen, die am Boden des Klärbeckens einen Rasen bilden. Die Enden dieser Schlauch- oder Röhrchenmembranen sind geschlossen. Sie bestehen aus elastischem, hydrophobem Material. Die Länge der Schlauch- oder Röhrchenmembranen ist geringer als 100 cm. Der Außendurchmesser der Schlauch- oder Röhrchenmembranen beträgt etwa 0,8 mm und der Innendurchmesser etwa 0,5 mm. Der Porendurchmesser liegt im Bereich zwischen 0,1 - 0,2 µm. Die aus den Poren der Schlauchmembranen austretenden Mikroblasen bilden einen senkrechten Blasenstrom, welcher für eine optimale Zirkulation und Luft/Sauerstoffsättigung beispielsweise eines belebten Schlamm/Abwasser-Gemisches oder sonstigen Feststoff/Flüssigkeitsgemischen oder einer Flüssigkeit, eines Gewässers oder dergleichen sorgt.

In der Phase II erfolgt die Belüftung über die Begasungsregister 2 mit max. 0,7 bar.

Bevor das unbehandelte Abwasser im Klärbecken 4 begast wird (Phase II), erfolgt außerhalb des Klärbeckens eine Vorbehandlung (Phase I) durch Begasung mit Luft, vorzugsweise mit Hilfe von Membranmodulen [beispielsweise Rohr-, Spiral- (Wickel-) oder Hohlfasermodulen], die einen Porendurchmesser von 0,01 µm - 10µm aufweisen. Das unbehandelte Abwasser wird dabei vorzugsweise mit Hilfe einer Zentrifugalpumpe mit einem Druck von 0,2 - 0,5 bar zugeführt. Das so in der Phase I durch Begasung vorbehandelte Abwasser wird dann ins Klärbecken 4 gepumpt, in dem es wie bekannt oder vorzugsweise mit Hilfe der oben beschriebenen Begasungsregister 2 belüftet wird.

Über einen Überlauf 6 wird ein Teil des geklärten Abwassers abgeführt, während ein anderer Teil des Überlaufs in die ebenfalls außerhalb des Klärbeckens befindliche dritte Behandlungsstufe (Phase III) gepumpt wird, aus der Konzentrat und begastes Filtrat bzw. Permeat vorzugsweise mit Hilfe von Injektoren 8 in das Abwasser des Klärbeckens 4 eingemischt wird.

Beim Behandlungs-/Begasungsverfahren der dritten Stufe (Phase III) wird der aus dem Überlauf 6 des Klärbeckens 4 abgepumpte Teil mittels wenigstens einer Kreiselpumpe 10 mit einem Druck von max. 10 bar durch ein vorzugsweise rückspülbar ausgebildetes Feinfilter 12 mit einer Porenweite von 1 µm - 100 µm gepumpt. Dieses Feinfilter 12 trennt Feststoffe (Flocken, Koagulate, Kristalle e.t.c.) ab, die zurück ins Klärbecken geleitet werden.

Das Filtrat bzw. Permeat des Feinfilters 12 wird anschließend durch einen vorzugsweise rückspülbar ausgebildetes Ultrafilter 14 (insbesondere als Entkeimungsfilter eingesetzt) mit einer Porenweite von 0,01 µm - 0,2 µm geleitet. Das Filtrat bzw. Permeat des Ultrafilters 14 durchströmt einen Membrankontaktor 16, in dem das Filtrat bzw. Permeat vorzugsweise im Gegenstrom mit Druckluft von max. 10 bar begast wird.

Als Ultrafilter werden vorzugsweise Hohlfasermembranen, beispielsweise mit einem Außendurehmesser von 0,05 - 0,2 mm und einem Innendurchmesser von 0,03 - 0,15 mm und einer Porenweite von 0,01 µm - 0,1 µm eingesetzt.

Die den Membrankontaktor 16 durchströmende Luft wird über eine Leitung 18 abgeführt.

Das aus dem Membrankontaktor austretende begaste Filtrat bzw. Permeat wird über eine Leitung 20 wieder dem Klärbecken 4 über die Injektoren 8 zugeführt.

Das im Ultrafilter 14 gewonnene Konzentrat wird über eine Leitung 22 ebenfalls über die Injektoren 8 dem Abwasser des Klärbeckens 4 zugemischt oder kann auch nochmals ein oder mehrere Male dem Feinfilter 12 und dem Ultrafilter 14 zugeführt werden, bevor es in das Klärbecken 4 geleitet wird.

Der sich am Boden des Klärbeckens 4 ansammelnde Schlamm wird mittels einer Förderstrecke 24 ausgetragen.

Die Luftzufuhr zu den einzelnen Behandlungsstufen Phase I, Phase II und Phase III erfolgt mit Hilfe von Luftkompressoren 26, denen ein Gaspermeator (nicht dargestellt) vorgeschaltet sein kann, welcher nach dem Diffusionsverfahren arbeitet und eine Sauerstoffaufkonzentrierung der Luft bis zu 95 % Sauerstoff bewirkt, wodurch der Sauerstoffeintrag wesentlich verbessert werden kann.

Ein Teil des durch die Verfahrensstufe Phase II belüfteten Abwassers kann auch zur weiteren Vorbehandlung in die Phase I rückgeführt werden.

Wenn wenig Abwasser anfällt, braucht nicht die gesamte Belüftungskapazität in der beschriebenen Vorrichtung benutzt zu werden; es können die Phasen I und III oder Teile der verwendeten Begasungsmodule abgeschaltet werden.

Es kann auch die Behandlungsstufe Phase I durch die Phase III ersetzt werden, wobei allerdings vorzugsweise ein kapillares Bandfilter (nicht dargestellt) vorgeschaltet wird, um größere Feststoffe und schleimige Stoffe vorher abzufiltern. Es kann auch nur die Behand-lungsphase I oder III vorgesehen werden.

Bei dem oben beschriebenen dreistufigen Aufbereitungsverfahren kann die pro Stunde zugeführte Menge an unbehandeltem Abwasser beispielsweise 400 m³ betragen bei einem Druck von 0,2 - 0,5 bar. Aus dem Überlauf kann dann eine Menge von 20 - 200 m³ pro Stunde in die Behandlungsphase III eingeleitet werden, während der restliche Teil als geklärtes Abwasser abgeführt wird. Bei diesen Mengen erreicht man einen Schlammaustrag von 10 t pro Stunde. Eine Berechnung der benötigten Energie zeigt, daß eine Einsparung gegenüber herkömmlichen Verfahren von fast nahezu 50 % erreichbar ist.

## Patentansprüche

1. Verfahren zur Verbesserung der Sauerstoffeinbringung bei einem aero-biologischen Aufbereitungsverfahren, bei dem ein aero-biologisch aufzubereitendes Medium, insbesondere Abwasser zur Sauerstoffanreicherung in einem Becken belüftet wird, **gekennzeichnet durch** folgende Verfahrensschritte:
- Filterung und/oder Vorbelüftung des Mediums vor dem Eintritt in das Becken und/oder
- Filterung des aus dem Becken überlaufenden geklärten Abwassers und/oder
- Nachbelüftung des Filtrats bzw. Permeats und/oder
- Rückführung des belüfteten Filtrats bzw. Permeats und des Konzentrats bzw. Retentats aus der Filterung in das Becken.

2. Vorrichtung zur Durchführung des Verfahrens nach Anspruch 1 mit einem Becken, in das unbehandeltes und aero-biologisch aufzuarbeitendes Medium gepumpt wird, das mittels einer Belüftungseinrichtung belüftet wird, wobei sich am Boden des Beckens ansammelnder Schlamm mittels einer Austragseinrichtung ausgetragen wird und geklärtes Abwasser über einen Überlauf abgeführt wird, **dadurch gekennzeichnet,** daß der Becken-Belüftungseinrichtung (2) eine außerhalb des Beckens angeordnete Vorbehandlungseinrichtung (Phase I) vorgeschaltet ist und/oder der Becken-Belüftungseinrichtung eine außerhalb des Beckens angeordnete Nachbehandlungseinrichtung (Phase III) nachgeschaltet ist.

3. Vorrichtung nach Anspruch 2, **dadurch gekennzeichnet,** daß die Vorbehandlungseinrichtung und die Nachbehandlungseinrichtung wenigstens eine Filtereinrichtung (12, 14) und/oder eine Belüftungseinrichtung aufweisen.

4. Vorrichtung nach Anspruch 3, **dadurch gekennzeichnet,** daß die Vorbehandlungseinrichtung eine reine Belüftungseinrichtung ist.

5. Vorrichtung nach Anspruch 4, **dadurch gekennzeichnet,** daß die Belüftungseinrichtung aus wenigstens einem Membranmodul besteht.

6. Vorrichtung nach Anspruch 5, **dadurch gekennzeichnet,** daß die Porenweite der Membranmodule 0,1 µm - 10 µm beträgt.

7. Vorrichtung nach Anspruch 3, **dadurch gekennzeichnet,** daß die Nachbehandlungseinrichtung ein Feinfilter (12), ein diesem nachgeschalteter Ultrafilter (14) und ein diesem Ultrafilter nachgeschaltetes Membranmodul (16) zur Belüftung des Ultrafilter-Filtrats bzw. -Permeats aufweist.

8. Vorrichtung nach Anspruch 7, **dadurch gekennzeichnet,** daß der Ultrafilter ein Hohlfasermembranmodul ist.

9. Vorrichtung nach Anspruch 8, **dadurch gekennzeichnet,** daß die Hohlfasern einen Außendurchmesser von 0,05 - 0,2 mm, einen Innendurchmesser von 0,03 - 0,15 mm und eine Porenweite von 0,01 - 0,1 µm aufweisen.

10. Vorrichtung nach Anspruch 7, **dadurch gekennzeichnet,** daß das Retentat der Filter (12, 14) und das belüftete Permeat der Nachbehandlungeinrichtung über Injektoren (8) in das Medium des Beckens eingemischt wird.

11. Vorrichtung nach einem der Ansprüche 2-10, **dadurch gekennzeichnet,** daß der Becken-Belüftungseinrichtung (2) Druckluft bis max. 0,7 bar, der Vorbehandlungseinrichtung Druckluft bis max. 0,5 bar und der Nachbehandlungseinrichtung Druckluft bis max. 10 bar zugeführt wird.

12. Vorrichtung nach Anspruch 11, **dadurch gekennzeichnet,** daß die Belüftungsluft durch Luftkompressoren zugeführt wird, denen Gaspermeatoren zur Sauerstoffanreicherung der Belüftungsluft vorschaltbar sind.
